# EUROPÄISCHE PATENTSCHRIFT

(11) **EP 0 608 852 B1**
(45) Veröffentlichungstag und Bekanntmachung des Hinweises auf die Patenterteilung: **16.04.1997**
(21) Anmeldenummer: 94101111.6
(22) Anmeldetag: 26.01.1994
(51) Int. Cl.: H02B 13/065

(54) **Verfahren und Vorrichtung zur Überwachung von mit Isoliergas gefüllten Schaltgeräten und Schaltanlagen**
Method and apparatus for monitoring of gas-insulated switchgear and installations
Procédé et dispositif pour la surveillance d'appareils et d'installations de commutations électriques blindées

(30) Priorität: 27.01.1993 DE 4302076; 11.06.1993 DE 4319377
(43) Veröffentlichungstag der Anmeldung: 03.08.1994
(73) Patentinhaber: DAIMLER-BENZ AKTIENGESELLSCHAFT, 70547 Stuttgart (DE); Licentia Patent-Verwaltungs-GmbH, 60596 Frankfurt (DE)
(72) Erfinder: Rass, Hermann, D-66663 Merzig (DE); Hoffmann, Klaus, D-64342 Seeheim-Jugenheim (DE); Schmidt, Georg, D-64625 Bensheim (DE); Karrenbauer, Herbert, D-34266 Niestetal (DE); Mlitzke, Ernst, D-65824 Schwalbach (DE)

(56) Entgegenhaltungen:
- EP-A- 0 342 597
- DE-A- 3 428 322
- DE-A- 4 108 588
- GB-A- 2 122 826
- US-A- 4 078 232
- US-A- 4 212 198

## Beschreibung

Die Erfindung bezieht sich auf ein Verfahren und eine Vorrichtung zur Überwachung von mit Isoliergas gefüllten Schaltgeräten und Schaltanlagen mit wenigstens einem vom Druck des Isoliergases betätigten Meßgerät, dessen Meßwerte mit wenigstens einem vorgegebenen Meßwert verglichen werden, bei dessen Unterschreitung eine Meldung erzeugt und/oder das jeweilige Schaltgerät oder die Schaltanlage in einen vorbestimmten Zustand versetzt werden.

Insbesondere Hochspannungsschaltgeräte und Hochspannungsschaltanlagen müssen für relativ lange Zeiträume betriebsbereit sein, wobei Wartungsarbeiten und damit Unterbrechungen der Betriebsbereitschaft aus wirtschaftlichen Gründen auf ein Minimum reduziert werden sollen. Die Betriebsbereitschaft der Schaltgeräte und -anlagen hängt unter anderem von einem ausreichend hohen Druck des Isoliergases ab. Um sicher zu gehen, daß keine Betätigung des jeweiligen Schaltgeräts oder ein Arbeiten der Schaltanlage bei zu niedrigem Isoliergasdruck stattfinden, wird der Druck der Geräte und Anlagen gemessen. Die Meßwerte können mit voreingestellten Druckwerten verglichen werden, von denen mindestens einer noch einem für die Anlagen oder Geräte ausreichenden Betriebsdruck entspricht und für die Abgabe eines Warnsignals bestimmt ist, das die Überprüfung der Anlage oder des Geräts veranlassen soll. Das Auftreten dieses Vorwarnsignals macht im allgemeinen die baldige Überprüfung des betroffenen Geräts und ein Forschen nach der Fehler- oder Störungsursache notwendig.

Aus der DE 34 28 322 A1 ist ein Verfahren zum Überwachen von Isoliergas in Hochspannungsschaltanlagen bekannt. Die Zustandsgrößen des Isoliergases werden durch Sensoren erfaßt und die Signale elektronisch weiterverarbeitet sowie bewertet. Als Sensoren werden ein Drucksensor, ein Temperatursensor und ein Lichtsensor verwendet. Zusätzlich wird das Auftreten eines Störlichtbogens in jedem Teilraum der Anlage überwacht. Die Signale der Sensoren verschiedener Teilräume gelangen über Optokoppler in eine zentrale elektronische Signalverarbeitungseinheit.

Ein weiteres Verfahren um insbesondere in gekapselten Hochspannungsschaltgeräten die Temperatur von besonders hoch beanspruchten Teilen zu messen, ist in der DE 41 08 588 A1 beschrieben. Die Temperatur wird über eine Strahlungsmessung mittels eines Pyrometers bestimmt, welches sich am Ende eines Lichtwellenleiters befindet. Der Lichtwellenleiter ist aus Sicherheitsgründen vorgesehen.

Aus der amerikanischen Patentschrift US-A-4 212 198 ist ein Dichtemeßgerät bekannt, bei welchem ein Bourdon-Rohr zur Druckmessung mit einer Anzeigevorrichtung versehen ist, welche eine Codierscheibe aufweist. Bei Druckänderung rotiert diese Scheibe, welche durchlässige und undurchlässige Sektoren enthält, welche nach dem Prinzip des Gray-Code angeordnet sind. Dabei verhalten sich die Längen der Sektoren wie Potenzen von zwei.

Der Erfindung liegt nun die Aufgabe zugrunde, ein Verfahren und eine Vorrichtung zur Überwachung von mit Isoliergas gefüllten Schaltgeräten zu entwickeln, mit denen bereits vor Erreichen der Grenzen von Meßwerten selbsttätig eine Zustandsänderung in Richtung kritischer Meßwerte erfaßbar und auswertbar ist.

Die Messungen sollen unter erschwerten Umweltbedingungen und auch bei starken elektromagnetischen Feldern möglichst genau erfolgen.

Die Aufgabe wird bei einem Verfahren der eingangs beschriebenen Art erfindungsgemäß dadurch gelöst, daß die Gasdichte des Isoliergases mit einem Dichtemeßgerät erfaßt wird, das eine druckempfindliche Meßzelle mit einem temperaturempfindlichen Glied zur Erzeugung von druckunabhängigen Gasdichtewerten enthält und an eine drehbare Welle gekoppelt ist, die eine mit einer absoluten Winkelcodierung, insbesondere im Gray-Code versehene Scheibe aufweist, die über Lichtwellenleiter Licht zur Abtastung zugeführt wird und von der hindurchgelassenes oder reflektiertes Licht über Lichtwellenleiter zu einer Auswertanordnung geleitet wird, daß Meßwerte in durch eine Zeitbasis bestimmten Abständen erfaßt und bezüglich ihres zeitlichen Verlaufs ausgewertet werden und daß bei zeitlichen Änderungen der Meßwerte, die außerhalb vorgegebener Grenzwerte liegen, eine Meldung erzeugt wird.

Mit dem vorstehend beschriebenen Verfahren läßt sich der zeitliche Verlauf der Dichte des Isoliergases über lange Zeiträume erkennen. Aus dem zeitlichen Verlauf kann auf einen Trend geschlossen werden. Wenn beispielsweise während der Zeiträume die Dichte stetig absinkt, kann auf ein Leck geschlossen werden. Die Absink- und Leckrate kann dazu verwendet werden, den Zeitpunkt zu berechnen, an dem eine für die Funktion der Geräte oder Anlagen kritische Grenze erreicht wird. Vor dem Erreichen dieser Grenze kann daher ohne Zeitdruck der Zeitpunkt der überprüfung des Geräts oder der Anlage geplant werden. Die Überprüfung und Wartung der nach dem oben beschriebenen Verfahren überwachten Schaltanlagen oder Schaltgeräte erfordert daher weniger Aufwand, insbesondere ist es nicht notwendig, Personal für den sofortigen Einsatz in Bereitschaft zu halten.

Bei einer Vorrichtung der eingangs beschriebenen Art wird die Aufgabe erfindungsgemäß dadurch gelöst, daß im jeweiligen Schaltgerät oder der jeweiligen Schaltanlage wenigstens ein Dichtemeßgerät mit einer druckempfindlichen Meßzelle angeordnet ist, die mit einem temperaturempfindlichen Glied zur Erzeugung von druckunabhängigen Gasdichtewerten verbunden ist und an ein Anzeigeelement gekoppelt ist, welches eine von einem Drehwinkel abgeleitete Dichteanzeige bewirkt, daß als Anzeigeelement des Meßgeräts eine mit einer absoluten Winkelcodierung versehene Scheibe vorgesehen ist, daß diese Scheibe um einen von der Dichte abhängigen Winkel verdrehbar ist, daß zur Anzeige Lichtstrahlen verwendet sind, welche von Codesegmenten reflektiert, absorbiert oder durchgelassen werden, daß zur Zufuhr, Kollimation, Detektion und zum Signaltransport Lichtwellenleiter verwendet sind, welche in ein gegen elektromagnetische und magnetische Störfelder abgeschirmtes Gehäuse hineingeführt sind, in dem eine Auswertanordnung und eine Zeituhr angeordnet ist, die in zeitlichen Abständen mit einer zentralen Echtzeituhr synchronisierbar ist, und daß in der Auswertanordnung Dichtewerte zum Vergleich mit den gemessenen Dichtewerten und Werte, die Grenzen für zeitliche Änderungen festlegen, gespeichert sind.

Die Meßeinrichtung ist bei der vorstehend beschriebenen Vorrichtung unempfindlich gegen elektrische, elektromagnetische oder magnetische Störfelder, da die Meßwerterfassung optisch geschieht und die mit elektrischen Signalen arbeitenden Schaltungsteile in einem abgeschirmten Gehäuse untergebracht sind.

Die Zeituhr wird in gewissen zeitlichen Abständen mit einer Zentraluhr synchronisiert. Dies bedeutet, daß bei einem Ausfall der Versorgungsspannung für die Auswertanordnung zwar die Zeituhr während der Ausfallzeit nicht mehr arbeitet, nach Wiederkehr der Versorgungsspannung aber wieder synchronisiert wird, und mit Echtzeit arbeitet. Durch die absolute Codierung des Dichtemeßgeräts steht nach einer Versorgungsspannungsunterbrechung sofort der genaue Gasdichtewert zur Verfügung. Die Überwachung der Gasdichte des Isoliergases, bei dem es sich überwiegend um SF₆ handelt, ist besonders wichtig, da in elektrischen Energieverteilungsnetzen die Anforderung an die Betriebssicherheit und Verfügbarkeit sehr hoch sind und die Schalter und Anlagen das Isoliergas über sehr lange Zeiträume speichern müssen.

Das SF₆-Gas hat insbesondere bei 20 °C in den Schaltern und Geräten einen Solldruck von 6 bar.

Durch die absolute Codierung ist es möglich, die Dichte bei einer Störung der Auswertschaltung oder nach einem Ausfall der Spannungsversorgung nach Beseitigung der Beeinträchtigung sofort wieder messen zu können. Der Aufwand für die Wartung, insbesondere bezüglich der Überwachung der Gasdichte, läßt sich hierdurch erheblich vermindern.

Besonders zweckmäßig ist ein Gasdichtemeßgerät das folgende Merkmale enthält:
a) eine druckempfindliche Meßzelle ist mit einem temperaturempfindlichen Glied zur Erzeugung von druckabhängigen Gasdichtewerten verbunden und an ein Anzeigeelement gekoppelt, das eine von einem Drehwinkel abgeleitete Dichteanzeige bewirkt,
b) das Anzeigeelement des Dichtemeßgeräts ist eine mit einer absoluten Winkelcodierung versehene Scheibe, die um einen von der Gasdichte abhängigen Winkel verdrehbar ist,
c) zur Anzeige werden Lichtstrahlen verwendet, die von Codesegmenten unterschiedlich reflektiert oder durchgelassen werden,
d) für die Zufuhr, Kollimation und Detektion des Lichtes und zum Signaltransport werden Lichtwellenleiter verwendet,
e) die Codesegmente auf der drehbaren Codescheibe sind in Spuren konzentrisch um den Drehpunkt und zur Verwirklichung eines Graycodes angeordnet,
f) die Codesegmente einer Spur, welche nach dem normalen Graycode gleichen Abstand vom Zentrum und gleiche Länge haben, sowie zu anderen Codesegmenten der benachbarten Spur symmetrisch angeordnet sind, haben in einem modifizierten Graycode unterschiedliche Länge,
g) die Anfangs- und Endpunkte sind so gewählt, daß sie die zur Erfüllung einer Meßaufgabe wesentlichen Grenz- und Meßwerte repräsentierten und daß beim Eintritt des Anfangs- und Endpunktes des Codesegments in den Lichtstrahl bei Drehung der Codescheibe die Bitfolge sich nur an einer Stelle ändert.

Das vorstehend beschriebene neuartige Dichtemeßgerät eignet sich nicht nur für die Gasdichtebestimmung bei elektrischen Schaltern und Anlagen sondern generell bei gasgefüllten Behältern. Auch hat das Dichtemeßgerät einen eigenständigen erfinderischen Gehalt.

Für die Überwachung der Gasdichte ist besonders günstig, daß man nicht nur den Maximal- und den Minimalwert der Gasdichte fernüberwachen kann, sondern auch Zwischenwerte und einen Gasdichteanstieg oder Gasdichteabfall innerhalb eines bestimmten Meßbereichs. Durch den Graycode ist es möglich, einmal eine sichere Überwachung des gesamten Bereichs mit relativ geringer Meßgenauigkeit durchzuführen und gleichzeitig im wichtigen Druckbereich eine Verfeinerung der Messung vorzunehmen. Es ist nur nötig, in diesem Bereich auf der Codescheibe weitere Codesegmente konzentrisch in feinerer Unterteilung einzubringen. Aufgrund des Graycodes lassen sich auch Absolutwerte vorgeben, die digital als Grenzwerte überwacht werden können. Diese digitalen Werte stellen sich zunächst als Lichtimpulse bzw. als belichtete oder unbelichtete Lichtwellenleiter dar. Diesen Impulsen werden entsprechende logische Zustände nach der Umwandlung der Lichtsignale in elektrische Signale zugeordnet.

Bei einer besonders zweckmäßigen Ausführungsform ist vorgesehen, daß am Meßort eine Antenne zum Empfang von Realzeitangaben in Form von Funktelegrammen einer Zentraluhr vorgesehen ist. An die Antenne ist dabei ein Zeitcodeempfänger mit einem Lichtsender angeschlossen, der über einen Lichtleiter an einen in der Einrichtung zum Messen und/oder Überwachen und/oder Steuern angeordneten optisch-elektrischen Wandler angeschlossen ist. Die Einrichtung ist mit einer Anordnung zum Führen und/oder Synchronisieren einer Echtzeituhr verbunden. Mit dieser Anordnung ist es möglich, bestimmten Ereignissen, insbesondere den zu bestimmten Zeitpunkten gemessenen Gasdichtewerten, Absolutzeiten oder Realzeiten zuzuordnen oder bestimmte Ereignisse wie Gasdichtemessungen zu vorgebbaren Zeiten durch die Einrichtung auslösen zu lassen.

Bei Hochspannungsgeräten treten durch Schaltvorgänge mit Lichtbögen oder auch durch Kurz- oder Erdschlüsse in Anlagenteilen oder Energieleitungen elektromagnetische Felder auf, die in elektronischen Bauteilen sehr häufig unzulässig hohe Überspannungen hervorrufen.

Derartige Überspannungen können auch durch Blitzstoßspannungen oder beim Spannungszusammenbruch infolge eines Durchschlags vorkommen. Durch sorgfältige elektromagnetische Schirmung der Geräte und durch Filter bzw. Trenntransformatoren in der Spannungsversorgung der Geräte sowie eine günstige Verlegung der Erdanschlüsse lassen sich Überspannungen auf für elektronische Schaltungen unkritische Werte erniedrigen. In Antennen werden aber zumeist hohe Störspannungen hervorgerufen, welche die zulässigen Werte übersteigen. Mit der oben beschriebenen Anordnung werden die Antenne und die an diese angeschlossenen Empfangsschaltungen von den elektronischen Bauelementen in der Einrichtung zum Messen, Überwachen oder Steuern galvanisch getrennt, so daß die an der Einrichtung getroffenen Maßnahmen zur Abschirmung von Überspannungen nicht durch die Antenne wirkungslos gemacht werden können. Ein weiterer Vorteil ist darin zu sehen, daß die Antenne und die an diese angeschlossene Empfangsschaltung mehr oder weniger weit von der Einrichtung an einer Stelle angebracht werden, an der eine günstige Empfangsfeldstärke vorhanden ist. Bei der hier vorgesehenen Verwendung von Lichtleitern können keine störenden Spannungen auf dem Übertragungsweg zwischen Antenne und der Einrichtung zum Messen, Steuern bzw. Überwachen eingekoppelt werden.
Die Auswertanordnung mit der oben beschriebenen Echtzeituhr kann daher dezentral an einem Schaltgerät, z. B. für Hochspannung, angeordnet werden. Mit derartigen Gasdichtemeßgeräten und Auswertanordnungen versehene Schaltgeräte und Schaltanlagen bilden für sich überwachbare Einheiten, ohne daß an zentraler Stelle ein großer Überwachungsaufwand notwendig ist. Die oben beschriebene Einrichtung zur zentralen Messung und/oder Überwachung und/oder Steuerung kann auch anderen Meßwerten als Gasdichten Zeiten bzw. Ereignisse zuordnen und hat ebenfalls einen eigenständigen erfinderischen Gehalt.

Vorzugsweise ist die Zentraluhr die Funkuhr des Senders DCF 77. Bei dieser Anordnung ist kein Aufwand für eine eigene Zentraluhr notwendig. Es wird das Impulstelegramm des Senders des DCF 77-Zeitcodes verwendet, das am Aufstellungsort von Hochspannungsschaltgeräten empfangen werden kann. Bei Wiederkehr der Betriebsspannung nach Unterbrechung der Betriebsspannungsversorgung für die Einrichtung zum Messen, Steuern bzw. Überwachen steht die Realzeit sofort, d. h. nach Empfang eines vollständigen Impulstelegramms, der Einrichtung auf Abruf zur Verfügung.

Die Zeitbasis kann dann sofort wieder für die Diagnostik oder die zeitliche Zuordnung von Störereignissen verwendet werden. Als Zeitcode kann z. B. auch ein IRIG-Code angewendet werden.

Bei einer bevorzugten Ausführungsform sind eine Ferritantenne mit dem Zeitcodeleser und dem Lichtsender in einem Modul angeordnet, das bis auf eine Aussparung für den Zugang elektromagnetischer Sendeenergie des Zeitcodesenders eine Abschirmung für elektromagnetische Strahlungen aufweist. Die Antenne kann dabei an oder nahe an der Oberfläche angeordnet sein, so daß die elektronischen Teile im Modul besonders gut gegen Störspannungen geschützt sind. Die Ferritantenne kann auch an der Oberfläche des Moduls angeordnet und z. B. in eine elektrisch isolierende Masse eingebettet sein, so daß eine noch bessere Abschirmwirkung erreicht wird.

Der Zeitcodeleser ist vorzugsweise als integrierte Schaltung ausgebildet, die mit einem externen Quarztaktgenerator verbunden ist. Als integrierte Schaltungen ausgebildete Zeitcodeleser sind an sich bekannt. Eine solche integrierte Schaltung wird von der Fa. Telefunken electronic GmbH unter der Type U4221B-A angeboten und vertrieben. Diese integrierte Schaltung erzeugt aus dem empfangenen seriellen Funktelegramm digitale serielle Signale, die von einem Mikrocomputer dekodiert werden können. Diese digitalen seriellen Signale werden vom Lichtsender in Lichtimpulse umgesetzt, die der Einrichtung zum Steuern und/oder Überwachen und/oder Messen zugeführt werden.

Es ist besonders zweckmäßig, wenn der Eingang des Zeitcodelesers für die Umschaltung des Zeitcodelesers vom passiven in den aktiven Zustand über ein Photoelement an die Betriebsspannungsquelle für das Modul angeschlossen ist, wobei das Photoelement von einem Lichtleiter beleuchtbar ist, in den von einem Lichtsender in der Einrichtung zum Messen und/oder Steuern und/oder Überwachen Lichtsignale eingebbar sind.

Diese Lichtsignale bewirken die Umschaltung des Zeitcodelesers vom Stand-By-Betrieb in den aktiven Betrieb. Im Stand-By-Betrieb verbraucht das Modul nur eine sehr geringe Energiemenge.

Eine kontinuierliche Übertragung des Zeitcodes zum Prozessor in der Einrichtung zum Messen, Überwachen bzw. Steuern ist zumeist nicht nötig, weil die Echtzeituhr in dieser Einrichtung, die vom Prozessor und einem Hardware-Zeitgeber geführt wird, die Zeit über eine längere Zeitdauer genügend genau angibt. Die genaue Zeit wird aus dem Modul daher nur in zeitlichen Abständen zur Synchronisation der Echtzeituhr über ein Lichtsignal, das von der Software im Prozessor ausgelöst wird, abgerufen. Da das Steuersignal zur Umschaltung vom Stand-By-Betrieb in den aktiven Betrieb des Moduls ebenfalls über Lichtleiter übertragen wird, gelangen keine Störspannungen über den Lichtleiter in das Modul oder die Einrichtung zum Messen, Überwachen bzw. Steuern am Leistungsschalter. Wenn nur ein Lichtleiter zwischen Modul und der Einrichtung zum Messen, Überwachen bzw. Steuern angeordnet werden soll, dann kann dieser nicht nur zum Übertragen des Zeitcodes sondern auch zum Aktivieren des Moduls verwendet werden, indem Licht bidirektional übertragen wird. An den beiden Enden des Lichtleiters müssen dann Lichtsender und Lichtempfänger vorhanden sein. Da die Aktivierung des Zeitcodelesers für die Dauer wenigstens einer vollständigen Zeitangabe oder - aus Gründen der Sicherheit der Übertragung - aus mehreren aufeinanderfolgenden Zeitangaben, bestehen bleiben muß, wird im Modul ein Speicher vor dem Aktivierungseingang vorgesehen. Dieser Speicher wird zum Aktivieren durch einen Lichtimpuls gesetzt und leitet dann Betriebsspannung auf den Aktivierungseingang. Nach Beendigung der Übertragung wird der Speicher zurückgesetzt.

Bei einer besonders vorteilhaften Ausführungsform sind die im Modul angeordneten Bauelemente zum Empfang und zur Umsetzung des Zeitcodes in Lichtsignale mit einem Solarzellengenerator verbunden, der die Energie für die Betriebsspannung erzeugt und in einen Speicher einspeist. Diese Anordnung benötigt keine Zuführleitung für die Betriebsspannung. Über Spannungsversorgungsleitungen können daher keine Störspannungen eingekoppelt werden. Außerdem ist diese Einheit unabhängig von Ausfällen der Betriebsspannung.

Eine andere zweckmäßige Ausführungsform besteht darin, daß die Betriebsspannung des Zeitcodelesers von einem Photoelement erzeugt wird, das über einen Lichtleiter beleuchtbar ist, in dessen anderes Ende Licht eingespeist wird.

Diese Anordnung ist besonders störunempfindlich, da keine elektrisch leitenden Teile für die Betriebsspannung außerhalb des Moduls benötigt werden. Das mit Licht beaufschlagte Photoelement erzeugt die Betriebsspannung. Der Speicher kann eine geringe Kapazität haben oder entfallen, wenn die Beleuchtung während der Dauer der Zeitcodeübertragung zur Einrichtung für die Messung, Überwachung bzw. Steuerung aufrecht erhalten wird. Die vom Photoelement erzeugte Spannung kann dann auch zur Beaufschlagung des Aktivierungseingangs der integrierten Zeitcodeleserschaltung verwendet werden. Dies bedeutet, daß kein eigener Lichtleiter für die Übertragung von Steuersignalen zum Aktivierungseingang notwendig ist. Die integrierte Schaltung arbeitet in einem weiten Bereich von Betriebsspannungen einwandfrei. Es ist aber auch eine Betriebsweise möglich, bei der durch einen entsprechend intensiven Lichtimpuls der Energiespeicher in kurzer Zeit so hoch aufgeladen und der Zeitcodeleser aktiviert wird, daß die Energie für die Dauer der Zeitübertragung ausreicht, d. h. die Betriebsspannung nicht unter die untere Grenze während der Übertragung abfällt.

Als Energiespeicher sind vorzugsweise Kondensatoren des Typs "Goldcap" vorgesehen und an die Anordnung zur Erzeugung der Betriebsspannung angeschlossen. Diese Kondensatoren haben eine hohe Kapazität bei geringen Abmessungen und hohe Lebensdauer. Sie eignen sich für die Energiespeicherung besser als Akkumulatoren, weil Akkumulatoren nur eine begrenzte Anzahl von Ladezyklen aushalten und daher häufiger auf Ausfall kontrolliert werden müssen. Die vorstehend erwähnten Kondensatoren überdauern störungsfrei die bei Hochspannungsschaltern geforderten langen Wartungsintervalle von z. B. mehr als 10 Jahren.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen:
- Fig. 1: ein Hochspannungsleistungsschalter mit Druckgasschaltern und einer Einrichtung zum Messen, Überwachen und/oder Steuern sowie einer eine Antenne enthaltenden Einheit schematisch in Seitenansicht;
- Fig. 2: Einzelheiten der Einheit und der Einrichtung gem. Fig. 1 im Blockschaltbild;
- Fig. 3: eine andere Ausführungsform der Einheit gem. Fig. 1 im Blockschaltbild;
- Fig. 4: ein Dichtemeßgerät schematisch;
- Fig. 5: eine am Dichtemeßgerät angeordnete Scheibe mit Codeelementen nach Gray;
- Fig. 6: eine schematische Darstellung des optischen Meßwerterfassungssystems und
- Fig. 7: eine bevorzugte Ausführungsform der Codescheibe.

Ein Hochspannungsleistungsschalter 1 enthält drei einpolige Druckgasleistungsschalter 2, 3, 4, die auf einem Träger 5 aufgestellt sind. Der Träger 5 ruht auf Pfeilern 6, die im Boden verankert sind. Jeder Druckgasleistungsschalter 2, 3, 4 enthält ein Gehäuse 7, 8, 9, in dem sich insbesondere ein Antrieb befindet, bei dem es sich um einen Federspeicherantrieb handeln kann. In den Gehäusen 7, 8, 9 sind jeweils elektronische Baugruppen 10, 11, 12 angeordnet. Die Baugruppen 10, 11, 12 sind insbesondere als Einschübe mit jeweils einer gegen elektromagnetische Störungen schützenden Kapselung ausgebildet. Die Kapselung kann Materialien von großer magnetischer Permeabilität und Materialien von hoher elektrischer Leitfähigkeit enthalten.

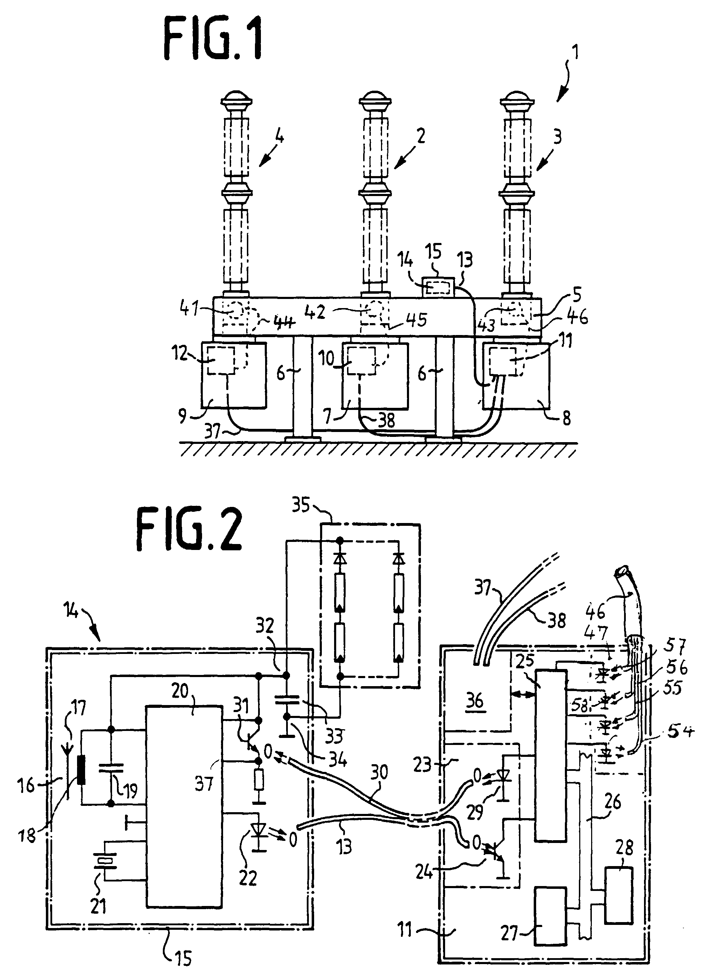

Die Baugruppe 11 ist durch wenigstens einen flexiblen Lichtwellenleiter 13 mit einer Einheit 14 verbunden, die sich in einem Gehäuse 15 befindet, das im Abstand von den Unterbrechereinheiten bzw. den Schaltkammern der Leistungsschalter z. B. auf dem Träger 5 angeordnet ist. Die Einheit 14 ist in Fig. 2 im Blockschaltbild dargestellt.

In den Untergestellen nicht näher bezeichneten Untergestellen der Hochspannungsleistungsschalter 2, 3, 4 sind Gasdichtemeßgeräte 41, 42, 43 eingebaut, die unten noch näher beschrieben sind. Die Gasdichtemeßgeräte sind mittels Lichtwellenleiter mit den elektronischen Baugruppen 10, 11, 12 verbunden.

Das in Fig. 2 mit parallelen Strichpunkten markierte Gehäuse 15 ist bis auf eine Ausnehmung 16 abgeschirmt. Die Abschirmung besteht aus Metall, z. B. mit hoher Permeabilität und guter Leitfähigkeit.

An der länglichen Ausnehmung 16 ist eine Ferritantenne 17 angeordnet, die insbesondere für den Empfang von elektromagnetischen Wellen im Frequenzbereich von 60-...80 KHz ausgebildet ist. Mit diesen Frequenzen werden über Funk Zeitcodeinformationen in Form von seriellen Telegrammen übertragen.

Die Wicklung 18 der Ferritantenne ist parallel mit einem Kondensator 19 an zwei Eingänge einer integrierten Schaltung 20 angeschlossen, bei der es sich um einen Zeitcodeleser handelt.

Dieser hat einen Aufbau wie er im Firmenprospekt U4221B-A der Telefunken electronic GmbH beschrieben ist. Die Wicklung der Ferritantenne speist in der integrierten Schaltung einen Verstärker, der mit einem externen Quartz-Schwingkreis 21 zusammenwirkt, damit eine hohe Selektivität erreicht wird.

An den Schwingkreis ist ein weiterer Verstärker angeschlossen, der einen Demodulator speist, der über einen Ausgangstreiber an eine Lichtquelle 22 angeschlossen ist, bei der es sich um eine Leuchtdiode oder eine Laserdiode handeln kann.

Die Lichtquelle 22 speist bei Beaufschlagung mit entsprechender Spannung Licht in den Lichtwellenleiter 13 ein, der zu der Baugruppe 11 verläuft. In der Baugruppe 11 ist der Lichtwellenleiter 13 mit einer Anschlußbaugruppe 23 verbunden, die einen optoelektrischen Wandler in Form einer Photodiode oder eines Phototransistors 24 enthält. Die Anschlußbaugruppe 23 ist in der Baugruppe 11 mit einer Eingabe-, Ausgabeschaltung 25 verbunden, die an einen Parallelbus 26 angeschlossen ist. Mit dem Parallelbus 26 stehen weitere Teile eines Mikrorechners, z. B. ein Prozessor 27 und ein Speicher, 28 in Verbindung.

Die Eingabe-, Ausgabeschaltung 23 ist mit einem elektrooptischen Wandler, einer Leuchtdiode 29 in der Anschlußbaugruppe 23 verbunden, die zu einem flexiblen Lichtwellenleiter 30 gehört, der mit dem Lichtwellenleiter 13 zu der Einheit 14 verlegt ist. Am Ende des Lichtwellenleiters 30 ist eine Photodiode oder ein Phototransistor 31 angeordnet.

Der Kollektor des Phototransistors 31 ist an den einen Anschluß 32 eines Kondensators 33 gelegt, der als Energiespeicher verwendet wird und auch den Betriebsspannungsanschluß des Zeitcodelesers 20 speist. Der Emitter des Phototransistors 31 steht über einen nicht näher bezeichneten Widerstand mit dem anderen Anschluß 34 des Kondensators 33 in Verbindung. Bei dem Kondensator 33 handelt es sich um einen des Typs "Goldcap", der eine besonders große Kapazität bei kleinem Volumen und geringe Entladeströme hat.

Der Emitter des Transistors 31 ist weiterhin mit einem Eingang der integrierten Schaltung 20 verbunden, der den Betriebszustand der Schaltung 20 steuert. Die Schaltung 20 ist im allgemeinen inaktiv und wird durch ein positives Betriebspotential aktiviert. Die Aktivierung wird über den Phototransistor 31 gesteuert.

Die Energieversorgung der Einheit 14 besteht aus einem Solarzellengenerator 35, der eine bestimmte Zahl von in Serie und parallel geschalteten Solarzellen aufweist, die in Fig. 2 dargestellt aber nicht näher bezeichnet sind. Der Solarzellengenerator erzeugt die Betriebsspannung von 5,5 V für die Schaltung 20 und ist mit seinen Polen an die Anschlüsse 32, 34 des Kondensators 34 gelegt. Die Schaltung 20 ist bei Betriebsspannungen zwischen 2,4 V und 5,5 V funktionsfähig. Die Baugruppe 11 bildet eine Einrichtung zur Messung und/oder Überwachung und/oder Steuerung des Leistungsschalters 3. An die Baugruppe 11 sind daher in Übereinstimmung mit der Funktion entsprechende, nicht dargestellte Sensoren bzw. Meßwertgeber und Stellelemente angeschlossen. Die Baugruppe 11 benötigt die "Absolutzeit" oder "Echtzeit". In der Baugruppe 11 wird eine "Absolutzeit-oder Echtzeituhr" geführt. Diese Uhr besteht zweckmäßigerweise aus einem Uhrimpulsgeber bzw. Taktgeber und einer Software-Uhr, die die Uhrzeit z. B. bis auf Sekunden genau angibt.

Von einem Funksender wird Zeitinformation in Form eines seriellen Impulstelegramms übertragen. In Deutschland handelt es sich um den Sender DCF 77,5 KHz. Das Funktelegramm besteht aus Rahmen von einer Minute Dauer und enthält BCD-kodierte Informationen.
Die Zeitinformation wird von der Baugruppe 11 aus abgerufen, indem durch ein Lichtsignal über den Lichtwellenleiter 30 die integrierte Schaltung in der Einheit 14 aktiviert wird.

Bei Beleuchtung wird der Phototransistor 31 leitend, wodurch Betriebsspannung zum Aktiviereingang gelangt. Die Einheit empfängt Funktelegramme und gibt seriell digitale Signale an die Leuchtdiode 22, die in Leuchtsignale umgesetzt werden, die von der Anschlußbau-gruppe 23 wieder in elektrische Signale umgesetzt werden und in die Ein-, Ausgabeschaltung 25 gelangen. Diese digitalen Signale werden vom Prozessor 27, z. B. einem Prozessor der Type INTEL 8051, dekodiert und zur Synchronisation der Echtzeituhr in der Baugruppe 11 verwendet. Die Echtzeituhr wird bei Neustart eingestellt und dann in größeren Zeitabständen, z. B. tageweise, synchronisiert.

In der Zwischenzeit befindet sich die Einheit 14 im inaktiven oder Stand-By-Betrieb, wodurch sie sehr wenig Energie verbraucht.

Die Eingabe-, Ausgabeschaltung 25 ist über eine weitere Anschlußbaugruppe 36 mit Lichtwellenleitern 37, 38 verbunden, die zu den Baugruppen 12 und 10 verlegt sind.

Nach der Synchronisation der Echtzeituhr in der Baugruppe 11 werden durch Übertragung der Echtzeit über die Lichtwellenleiter 37, 38 die in den Baugruppen 12 und 10 vorhandenen Echzeituhren ebenfalls synchronisiert.

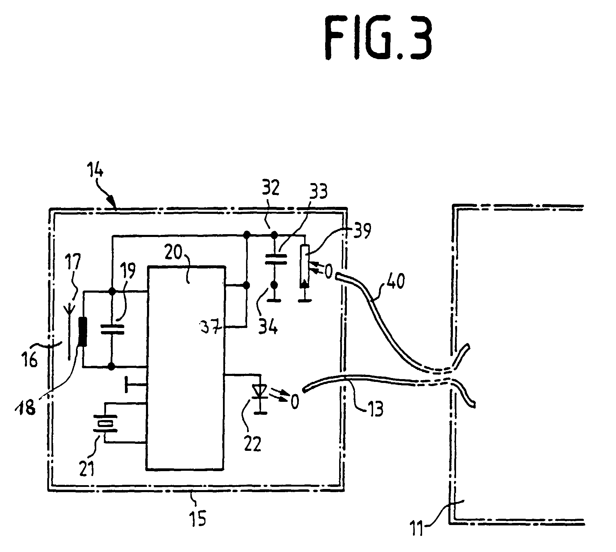

Die Fig. 3 zeigt eine Einheit 14, bei der die Betriebsspannungsversorgung auf andere Weise erzeugt wird. Die Einheit 14 enthält ein Photoelement 39, das mit den Anschlüssen 32, 34 des Kondensators 33 verbunden ist. Das Photoelement 39 ist von einem Lichtwellenleiter 40 aus beleuchtbar, der von der Baugruppe 11 ausgeht. Der Aktiviereingang der integrierten Schaltung in der Einheit 14 ist bei vorhandenem Photoelement 39 unmittel-bar mit dem Anschluß 37 verbunden. In der Baugruppe 11 ist der Lichtwellenleiter 40 über eine nicht näher bezeichnete Anschlußbaugruppe, die einen optoelektrischen Wandler enthält, mit der Eingabe-, Ausgabeschaltung 25 verbunden.

Die Einheit 14 gem. Fig. 3 befindet sich dann, wenn das Photoelement 39 nicht beleuchtet wird und der Kondensator 33 entladen ist, in inaktivem Zustand. Wird das Photoelement 39 beleuchtet, dann lädt es den Kondensator 33 auf, wodurch die integrierte Schaltung Betriebsspannung enthält, die zugleich den aktiven Betriebszustand erzeugt.

Es wird dann das empfangene Funktelegramm demoduliert und über den Lichtsender 22 und den Lichtwellenleiter 13 der Baugruppe 11 zugeführt.

Bei Hochspannungsschaltgeräten, die sich zumeist in Schaltanlagen befinden, ist mit störenden elektromagnetischen Feldern zu rechnen, die bei digitalen Steuer- und Überwachungsgeräten, die mit niedrigen Spannungen arbeiten, unerwünscht hohe Störspannungen hervorrufen können.

Bei den vorstehend beschriebenen Vorrichtungen wird verhindert, daß Störspannungen über den Funkempfänger für den Zeitcode in die Einrichtungen zur Messung und/oder Überwachung und/oder Steuerung an den Leistungsschaltern 2, 3 und 4 gelangen können. Die Antenne 17 mit der Einheit 14 kann an einer Stelle mit günstiger Empfangsfeldstärke für die Funktelegramme des Zeitcodes aufgestellt werden. Ein weiterer Vorteil der Anordnung besteht darin, daß die Einheit 14 eine eigene, autarke Stromversorgung hat.

Einerseits wird durch die Trennung der Stromversorgungen der Baugruppen 10, 11 und 12 von der Stromversorgung der Einheit 14 verhindert, daß in die Baugruppen 10, 11, 12 Störsignale über Betriebsspannungsleitungen eingespeist werden, andererseits kann die Betriebsspannung bei den Baugruppen 10, 11, 12 ausfallen, ohne daß die Betriebsbereitschaft der Einheit 14 verloren geht.

Das Photoelement 39 kann auch kurzzeitig so stark beleuchtet werden, daß die der Kondensator 33 auf die maximale Betriebsspannung von 5,5 V aufgeladen wird und soviel Energie speichert, daß die Spannung bei aktiver Einheit 14 während der Dauer des Empfangs und der Übertragung des Zeitcodes nicht unter 2,5 V absinkt.

Da über die Lichtwellenleiter 13, 30 und 40 nur geringe Datenraten übertragen werden, reichen Lichtwellenleiter aus, die im wesentlichen eine geringe Dämpfung haben, ohne daß die Impulsverzerrung eine große Rolle spielt. Bei den oben beschriebenen Anordnungen erfolgt die Übertragung unidirektional. Es ist aber auch eine bidirektionale Übertragung auf einem Lichtwellenleiter des Aktivierungssignals und der digitalen Zeitsignale möglich.

In diesem Fall muß in der Einheit 14 ein Speicher vorhanden sein, der für die Dauer der Zeitcodeübertragung die Aktivierung der Schaltung aufrecht erhält. Bei bidirektionaler Übertragung sind Torkoppler an den Enden der Lichtwellenleiter vorgesehen.

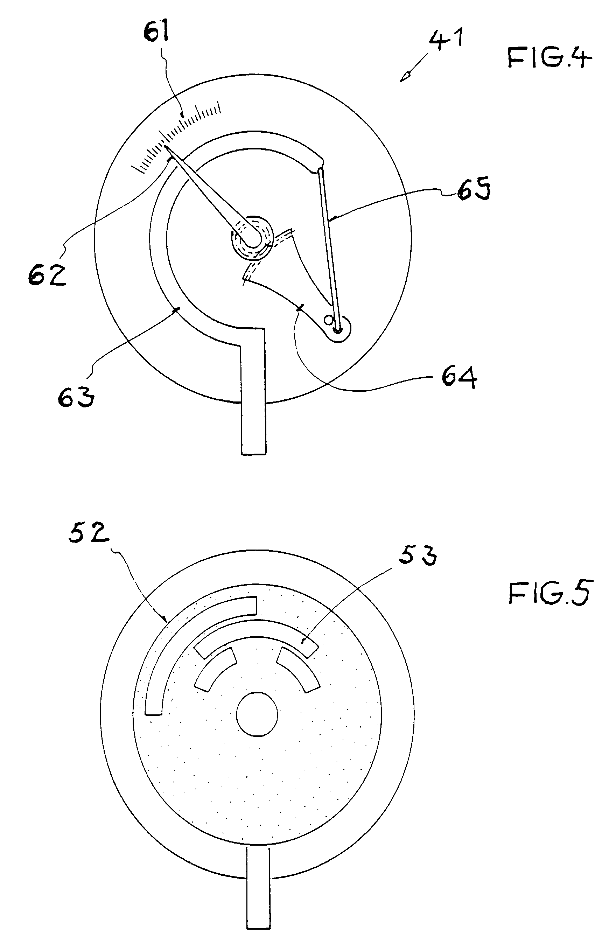

Die Gasdichtemeßgeräte 41, 42, 43 sind, da sie in den Untergestellen eingebaut sind, den gleichen Temperaturbedingungen ausgesetzt wie die zu überwachenden Gasräume der Hochspannungsleistungsschalter 2, 3 und 4. In den Gasräumen befindet sich Isoliergas, z. B. SF₆ mit beispielsweise 6 bar bei 20 °C.
Die Gasdichtemeßgeräte 41, 42 und 43 haben den in den Figuren 4 bis 7 dargestellten Aufbau.

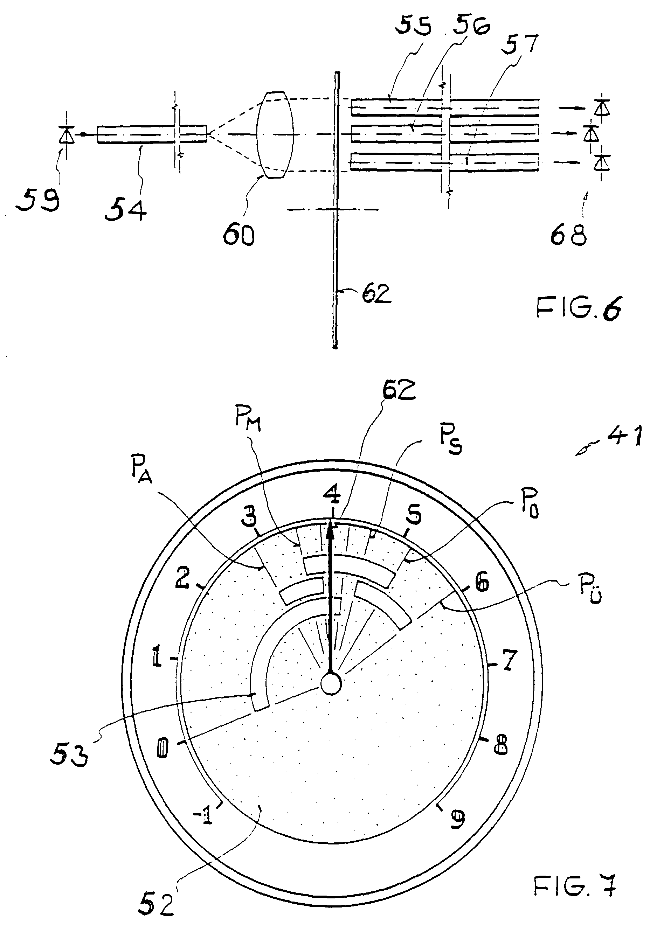

Die Fig. 4 zeigt ein Gasdichtemeßgerät 41 mit Bourdon-Rohr 63, Zeiger 62, Skala 61 sowie dem Zeigerantrieb 64 und mit einem temperaturempfindlichen Glied 65. Auf der Achse des Zeigers befindet sich eine Scheibe 52 mit lichtdurchlässigen Segmenten 53, wie in Fig. 5 dargestellt. Durch die Kompensationswirkung des temperaturempfindlichen Gliedes 65 kann die Gasdichte gemessen werden. Die Scheibe 52 kann auch statt lichtdurchlässiger und lichtundurchlässiger Zonen in einer weiteren, vorteilhaften Ausführungsform solche Zonen aufweisen, die Licht stark oder weniger stark bzw. besonders schwach reflektieren.

Die Fig. 6 zeigt eine Seitenansicht des Meßsystems mit der Scheibe 52, einer Optik 60, welche den über einen Lichtleiter 64 übertragenen Lichtstrahl aus einer lichtemittierenden Diode 59 spaltförmig auf die Scheibe 52 abbildet.

Hinter der Scheibe 52 sitzen beispielsweise drei Lichtwellenleiter 55, 56 und 57. Ihr Licht wird in einem abgeschirmten Gehäuse auf Dioden 58 geleitet.

Das Gehäuse hat vorzugsweise eine erste Hülle aus ferromagnetischem Material und eine zweite Hülle aus einem elektrisch gut leitenden Material. Falls eine höhere Genauigkeit erforderlich sein sollte, sind weitere Segmente nach dem Graycode zur feineren Aufteilung des zu messenden Winkelbereichs vorgesehen. Statt des Bourdon-Rohrs 63 kann auch eine Meßzelle mit Plattenfeder verwendet werden.

Wie in Fig. 4 dargestellt geht der Bereich der Anzeige des Manometers über 270 °C. Um dies mit einer vernünftigen Auflösung darstellen zu können, wäre mindestens ein 8 oder 10 bit breiter Code notwendig. Dies wäre für eine Lichtleitermessung sehr aufwendig, da 10 Rückleitungen benötigt würden.

Wie sich zeigt, ist der eigentlich interessante Bereich viel kleiner. Man könnte ihn auf einen Winkel von 30° oder 60° beschränken. Der 30°-Bereich wäre mit einer 4-bit-Codescheibe, der 60°-Bereich mit einer 5-bit-Codescheibe und einer Auflösung von 2° darstellbar. Hierdurch läßt sich die Anzahl der Lichtleiter, die vom Gehäuse zum jeweiligen Schalter zu verlegen sind, vermindern.

Der Zeiger 62 des Bourdon-Rohrs 63 ist nach wie vor vorhanden, so daß auch vor Ort der Druck abgelesen werden kann.

Anstelle der Optik 60 kann auch ein Lichtleiter verwendet werden, der an seinem der Scheibe 52 zugewandten Ende in einzelne lichtleitende Elemente verzweigt, deren Enden je einer Spur der Scheibe 52 zugewandt ist.

In einer weiteren vorteilhaften Ausführungsform der Erfindung wird die Codescheibe 52 so modifiziert, daß sie dem Meßproblem angepaßt ist. Das bedeutet, daß die Codesegmente 53 sich nicht mehr wie 4:2:1 verhalten (3-bit-Graycode) sonder Winkelbereiche unterschiedlicher Größe definieren.

Dabei ist der eigentlich interessante Meßbereich feiner unterteilt und wie Fig. 7 zeigt, liegen die Grenzwerte, bei denen eine Meldung erfolgt, vorzugsweise genau bei den Winkeln, bei denen sich die Bitfolge an einer Stelle ändert.

Meldungen erfolgen beispielsweise bei P_{A} (SF₆-Schalter außer Betrieb setzen), P_{M} (Gasdruckabfall am Schalter wird gemeldet:
"Wartung veranlassen"), P_{S} (Solldruck ist erreicht) und P_{ü} (Schalter hat Überdruck). Dadurch ist es möglich, einige Lichtwellenleiter und Teile der Auswerteelektronik gegenüber dem Verfahren mit "linearem" Graycode einzusparen. Zwischen dem obersten und untersten Druck im Toleranzbereich P_{S} - P_{M} sind zwei Zwischenwerte detektierbar sowie noch ein Zwischenwert Pₒ vor P_{ü}.

Es ist ohne weiteres möglich, diese Form der Codescheibe zu ändern, falls andere Alarmwerte gewählt werden. Eine feinere Unterteilung ist an jeder gewünschten Stelle möglich.

Wenn die Lichtwellenleiter beim Schaltvorgang erheblichen mechanischen Wechselbeanspruchungen unterliegen, die im Falle von Glasfasern zum Bruch führen können, ist vorgesehen, daß die Lichtleitfasern aus einem hochtransparenten elastischen Kunststoff bestehen.

Die Lichtwellenleiter 54, 55, 56 und 57 sind bei allen drei Gasdichtemeßgeräten 41, 42 und 43 jeweils in einem Lichtleiterkabel 44, 45 und 46 angeordnet. Das Lichtleiterkabel 44 ist zur Baugruppe 12 verlegt, in dem sich die Dioden 58 befinden. In entsprechender Weise sind die Lichtleiterkabel 45 und 46 je zu den Baugruppen 10 und 11 verlegt, in denen die zugehörigen Dioden angeordnet sind. Die Anordnung der Dioden 58 ist für die Baugruppe 11 näher beschrieben. Die Dioden 58 befinden sich in einer Eingabeschaltung 47 angeordnet, in der die Lichtwellenleiter 54, 55, 56 und 57 enden.

Die jeweils einem der Lichtwellenleiter 54, 55, 56 und 57 zugeordneten Dioden sind an die Eingabe-, Ausgabeschaltung 25 angeschlossen, die mit dem Parallelbus 26 verbunden ist. Über die Eingabe-, Ausgabeschaltung 25, die nicht näher dargestellte Speicher enthält, steuert der Prozessor 27 die Beaufschlagung des Lichtwellenleiters 54 mit Licht durch die Diode 57 und stellt fest, ob die Lichtwellenleiter 55, 56 und 57 die zugeordneten Dioden 58 mit Licht beaufschlagen. Die Auswertung der von den Dioden 58 an die Eingabe-, Ausgabeschaltung 25 abgegebenen Signale geschieht durch den Prozessor 27, der zugleich die Zeitpunkte des Auftretens der Signale erfaßt, bei denen es sich um die Meßwerte der Gasdichte im zugeordneten Hochspannungsleistungsschalter handelt.

Die auf der Welle des Zeigers 62 angeordnete Scheibe 52 stellt bereits die Gasdichtemeßwerte in digitaler Form zur Verfügung. Diese Gasdichtemeßwerte wertet die jeweilige Baugruppe 10, 11 und 12 aus, in denen als Auswerteeinheiten je die den Prozessor 27 enthaltenden Mikrocomputerschaltungen angeordnet sind.
Die Mikrocomputerschaltungen steuern die Ablesung der Scheiben 52 zu bestimmte Zeitpunkten, die durch ein Programm vorgegeben sein können.

Mit der oben beschriebenen Anordnung werden die Dichtemeßwerte den Meßzeitpunkten zugeordnet. Die Gasdichte wird in bestimmten Zeitintervallen gemessen. Anhand der zu verschiedenen Zeitpunkten gemessenen Gasdichten kann der zeitliche Verlauf des Gasdrucks in einem bestimmten Zeitabschnitt festgestellt werden. Dieser zeitliche Verlauf gibt Auskunft darüber, ob der Behälter des Hochspannungsschalters dicht ist oder ein Leck hat.
Wenn der Behälter nur geringfügig leckt, geht die Gasdichte allmählich zurück. Aus den Gasdichtemeßwerten und den Meßzeitpunkten läßt sich die Leckrate bestimmen. Für die Gasdichte sind bestimmte Grenzwerte vorgeschrieben, die nicht unterschritten werden dürfen, wenn der zugeordnete Hochspannungsschalter noch einwandfrei arbeiten soll. Durch die in der Mikrocomputerschaltung vorhandene Software wird der gemessene Gasdruck mit den Grenzwerten verglichen, von denen einer so hoch festgesetzt wird, daß der Hochspannungsschalter noch einwandfrei arbeitet. Auf der Basis der ermittelten Leckrate kann festgestellt werden, in welcher Zeitspanne ab dem Meßzeitpunkt der erste, noch unkritische Gasdichtegrenzwert oder die weiteren Grenzwerte erreicht werden. Auch diese Zeitspanne wird dem für den Schalterbetrieb zuständigen Personal gemeldet. Anhand der Zeitspanne kann dann eine Überprüfung des betroffenen Hochspannungsschalters zu einem für die Ausführung der Arbeiten geeigneten Zeitpunkt, z. B. während der Wochentage, festgelegt werden.

Bei der oben beschriebenen Anordnung wird die Bestimmung der Leckrate nicht durch gelegentliche Unterbrechungen der Betriebsspannung für die Baugruppen 10, 11 und 12 beeinträchtigt.

Es reicht aus, wenn die Gasdichte in längeren Zeitspannen gemessen wird, da die Änderungen in längeren Zeiträumen stattfinden. Die Echtzeit steht dem Prozessor nach dessen Initialisierung bei Spannungswiederkehr zur Verfügung, so daß sofort eine Gasdichtemessung unter Zuordnung vom Meßzeitpunkt stattfinden kann. Damit können Leckraten bzw. Trends und Prognosen unabhängig von gelegentlichen Unterbrechungen der Betriebsspannungen der Baugruppen 10, 11 und 12 ermittelt werden. In diesen Baugruppen werden die jeweiligen Echtzeituhren insbesondere als Software-Uhren geführt. Es ist aber auch günstig, den Takt eines Taktgebers auszunutzen, um eine Echtzeituhr zu führen, die im übrigen als Software-Uhr ausgebildet ist.

## Patentansprüche

1. Verfahren zur Überwachung von mit Isoliergas gefüllten Schaltgeräten oder Schaltanlagen mit wenigstens einem vom Druck des Isoliergases betätigten Meßgerät, dessen Meßwerte mit wenigstens einem vorgegebenen Wert verglichen werden,
**dadurch gekennzeichnet**,
daß die Gasdichte des Isoliergases mit einem Dichtemeßgerät (41) erfaßt wird, das eine druckempfindliche Meßzelle mit einem temperaturempfindlichen Glied zur Erzeugung von druckunabhängigen Gasdichtewerten enthält und an eine drehbare Welle gekoppelt ist, die eine mit einer absoluten Winkelcodierung insbesondere im Gray-Code versehene Scheibe (52) aufweist, die über Lichtwellenleiter (54) Licht zur Abtastung zugeführt erhält und von der hindurchgelassenes oder reflektiertes Licht über Lichtwellenleiter (55, 56, 57) zu einer Auswerteanordnung (11) geleitet wird, daß Meßwerte in durch eine Zeitbasis bestimmten Abständen erfaßt und bezüglich ihres zeitlichen Verlaufs ausgewertet werden und daß bei zeitlichen Änderungen der Meßwerte, die außerhalb vorgegebener Grenzwerte liegen, eine Meldung erzeugt wird.

2. Vorrichtung zur Überwachung von mit Isoliergas gefüllten Schaltgeräten oder Schaltanlagen mit wenigstens einem vom Druck des Isoliergases betätigten Meßgerät, dessen Meßwerte mit wenigstens einem vorgegebenen Wert verglichen werden,
dadurch gekennzeichnet,
daß im jeweiligen Schaltgerät (2, 3, 4) oder der Schaltanlage wenigstens ein Gasdichtmeßgerät (41, 42, 43) mit einer druckempfindlichen Meßzelle angeordnet ist, die mit einem temperaturempfindlichen Glied (65) zur Erzeugung von druckunabhängigen Gasdichtewerten verbunden und an ein Anzeigeelement gekoppelt ist, welches eine von einem Drehwinkel abgeleitete Dichteanzeige bewirkt, daß als Anzeigeelement des Gasdichtemeßgeräts (41) eine mit einer absoluten Winkelcodierung versehene Scheibe (52) vorgesehen ist, daß diese Scheibe (52) um einen von der Dichte abhängigen Winkel verdrehbar ist, daß zur Anzeige Lichtstrahlen verwendet sind, welche von Codesegmenten (53) reflektiert, absorbiert oder durchgelassen werden, daß zur Kollimation, Detektion und zum Signaltransport Lichtwellenleiter (54, 55, 56, 57) verwendet sind, welche in ein gegen elektromagnetische, elektrische und magnetische Störfelder abgeschirmtes Gehäuse (7, 8, 9) hineingeführt sind, in dem Auswerteanordnungen und je eine Echtzeituhr angeordnet ist, die in zeitlichen Abständen mit einer zentralen Echtzeituhr synchronisiert ist, und daß in den Auswerteanordnungen Gasdichtewerte zum Vergleich mit den gemessenen Gasdichtwerten und Werte, die Grenzen für zeitliche Änderungen festlegen, gespeichert sind.

3. Vorrichtung nach Anspruch 2,
dadurch gekennzeichnet,
daß das Gasdichtemeßgerät folgende Merkmale enthält:
a) eine druckempfindliche Meßzelle ist mit einem temperaturempfindlichen Glied (65) zur Erzeugung von druckunabhängigen Gasdichtewerten verbunden und an ein Anzeigeelement gekoppelt, das eine von einem Drehwinkel abgeleitete Dichteanzeige bewirkt,
b) das Anzeigeelement des Dichtemeßgeräts ist eine mit einer absoluten Winkelcodierung versehenen Scheibe (52), die um einen von der Gasdichte abhängigen Winkel verdrehbar ist,
c) zur Anzeige werden Lichtstrahlen verwendet, die von Codesegmenten unterschiedlich reflektiert oder durchgelassen werden,
d) für die Zufuhr, Kollimation und Detektion des Lichts und zum Signaltransport werden Lichtwellenleiter (54, 55, 56, 57) verwendet,
e) die Codesegmente (53) auf der drehbaren Codescheibe (52) sind in Spuren konzentrisch um den Drehpunkt und zur Verwirklichung eines Gray-Codes angeordnet,
f) die Codesegmente (53) einer Spur, welche nach dem normalen Gray-Code gleichen Abstand vom Zentrum und gleiche Länge haben sowie zu anderen Codesegmenten der benachbarten Spur symmetrisch angeordnet sind, haben in einem modifizierten Gray-Code unterschiedliche Länge,
g) die Anfangs- und Endpunkte der Codesegmente (53) sind so gewählt, daß sie die zur Erfüllung einer Meßaufgabe wesentlichen Grenz- und Meßwerte repräsentieren und daß beim Eintritt des Anfangs- und Endpunktes des Codesegments (53) in den Lichtstrahl bei Drehung der Codescheibe (52) die Bitfolge sich nur an einer Stelle ändert.

4. Vorrichtung nach Anspruch 2 oder 3,
dadurch gekennzeichnet,
daß die Lichtwellenleiter (13, 30, 37, 38, 44, 45, 46) in gegen elektrische, magnetische und/oder elektromagnetische Felder abgeschirmten Gehäusen (7, 8, 9) eingeführt sind, in denen die Auswerteanordnung ein Prozessorsystem enthält.

5. Vorrichtung nach einem oder mehreren der Ansprüche 2 bis 4,
dadurch gekennzeichnet,
daß das Dichtemeßgerät (41) eine Meßzelle mit einem Bourdonrohr aufweist.

6. Vorrichtung nach einem oder mehreren der Ansprüche 2 bis 4,
dadurch gekennzeichnet,
daß das Dichtemeßgerät (41) eine Meßzelle mit eine Plattenfeder ausweist.

7. Vorrichtung nach einem oder mehreren der Ansprüche 2 bis 6,
dadurch gekennzeichnet,
daß das Dichtemeßgerät (41) eine Meßzelle aufweist, die mit dem Anzeigeelement über ein Getriebe gekoppelt ist.

8. Vorrichtung, nach einem oder mehreren der vorhergehenden Ansprüche,
dadurch gekennzeichnet,
daß eine Antenne (17) zum Empfang von Realzeitangaben in Form von seriellen Funktelegrammen einer Zentraluhr vorgesehen ist, und daß an die Antenne (17) ein Zeitcodeleser mit einem Lichtsender angeschlossen ist, der über einen Lichtleiter (13) an einen in der Einrichtung zum Messen und/oder Überwachen und/oder Steuern angeordneten optisch-elektrischen Wandler angeschlossen ist, der mit einer Anordnung zum Führen und/oder Synchronisieren einer Echzeituhr verbunden ist.

9. Vorrichtung nach Anspruch 8,
dadurch gekennzeichnet,
daß die Zentraluhr die Funkuhr des Senders DCF 77 ist.

10. Vorrichtung nach Anspruch 8 oder 9,
dadurch gekennzeichnet,
daß die Antenne (17) und der Zeitcodeleser in einem elektromagnetisch abgeschirmten Gehäuse (15) angeordnet sind, das an einer Seite in der Abschirmung eine Aussparung (16) für den Durchlaß elektromagnetischer Strahlung zur Antenne (17) hat.

11. Vorrichtung nach einem oder mehreren der Ansprüche 2 bis 10,
dadurch gekennzeichnet,
daß der Zeitcodeleser als integrierte Schaltung (20) und zum Empfang und zur Erzeugung demodulierter digitaler Ausgangssignale des seriellen Zeitcodetelegramms mit einem externen Quarztaktgenerator ausgebildet ist, der an die Schaltung (20) angeschlossen ist.

12. Vorrichtung nach einem oder mehreren der Ansprüche 2 bis 11,
dadurch gekennzeichnet,
daß die Betriebsspannung für den Zeitcodeleser von einem Solarzellengenerator (17) erzeugt wird.

13. Vorrichtung nach einem oder mehreren der Ansprüche 2 bis 4,
dadurch gekennzeichnet,
daß die Betriebsspannung des Zeitcodelesers von einem Photoelement (39) erzeugt wird, das über einen Lichtleiter (40) mit Licht beaufschlagbar ist.

14. Vorrichtung nach Anspruch 13,
dadurch gekennzeichnet,
daß das eine Ende des Lichtleiters (40) in der Einrichtung zum Messen und/oder Steuern und/oder Überwachen angeordnet ist.

15. Vorrichtung nach einem oder mehreren der vorhergehenden Ansprüche,
dadurch gekennzeichnet,
daß wenigstens ein Kondensator vom Typ "Goldcap" an die Anordnung zur Erzeugung der Betriebsspannung für den Zeitcodeleser angeschlossen ist.

## Claims

1. Method for the monitoring of switching apparatus or switching installations filled with insulating gas, comprising at least one measuring instrument which is actuated by the pressure of the insulating gas and the measurement values of which are compared with at least one predetermined value, characterised thereby that the gas density of the insulating gas is detected by a density measuring instrument (41), which comprises a pressure-sensitive measurement cell with a temperature-sensitive element for generation of pressure-independent gas density values and is coupled to a rotatable shaft having a disc (52), which is provided with an absolute angle coding particularly in Gray code and which gets fed, by way of optical waveguides (54), light for scanning and from which transmitted or reflected light is conducted to an evaluating arrangement (11) by way of optical waveguides (55, 56, 57), that measurement values are detected at intervals determined by a time basis and evaluated with respect to their course over time and that in the case of changes over time, which lie outside preset limit values, of the measurement values a report is generated.

2. Device for the monitoring of switching apparatus or switching installations filled with insulating gas, comprising at least one measuring instrument which is actuated by the pressure of the insulating gas and the measurement values of which are compared with at least one predetermined value, characterised thereby that arranged in the respective switching apparatus (2, 3, 4) or the switching installation is at least one gas density measuring instrument (41, 42, 43) with a pressure-sensitive measuring cell, which is connected with a temperature-sensitive element (65) for generation of pressure-independent gas density values and is coupled to an indicating element which produces a density indication derived from a rotational angle, that the gas density measuring instrument (41) is provided with a disc (52), which is provided with an absolute angle coding, as indicating element, that this disc (52) is rotatable through an angle dependent on the density, that light beams, which are reflected, absorbed or transmitted by code segments (53), are used for the indication, that for collimation, detection and signal transport there are used optical conductors (54, 55, 56, 57) which are led into a housing (7, 8, 9), which is screened against electromagnetic, electrical and magnetic interference fields and in which evaluating arrangements and a respective real time clock, which is synchronised at time intervals with a central real time clock, are arranged, and that gas density values for comparison with the measured gas density values and values establishing the limits for changes over time are stored in the evaluating arrangements.

3. Device according to claim 2, characterised thereby that the gas measuring instrument has the following features:
a) a pressure-sensitive measuring cell is connected with a temperature-sensitive element (65) for the generation of pressure-independent gas density values and coupled to an indicating element, which produces a density indication derived from a rotational angle,
b) the indicating element of the density measuring instrument is a disc (52) which is provided with an absolute angle coding and is rotatable through an angle dependent on the gas density,
c) light beams, which are differently reflected or transmitted by code segments, are used for the indication,
d) optical waveguides (54, 55, 56, 57) are used for the feed, collimation and detection of the light and for the signal transport,
e) the code segments (53) are arranged on the rotatable code disc (52) in tracks concentrically about the point of rotation and for the realisation of a Gray code,
f) the code segments(53) of one track, which according to the normal Gray code have the same spacing from the centre and the same length as well as are arranged symmetrically to other code segments of the adjacent track, have different lengths in a modified Gray code,
g) the start point and end point of the code segments (53) are so selected that they represent essential limit and measurement values for the fulfillment of a measuring task and that on entry of the start point and end point of the code segment (53) into the light beam during rotation of the code disc (52) the bit sequence changes only at one place.

4. Device according to claim 2 or 3, characterised thereby that the optical waveguides (13, 30, 37, 38, 44, 45, 46) are led into housings (7, 8, 9) which are screened against electrical, magnetic and/or electromagnetic fields and in which the evaluating arrangement contains a processor system.

5. Device according to one or more of claims 2 to 4, characterised thereby that the density measuring instrument (41) comprises a measuring cell with a Bourdon tube.

6. Device according to one or more of claims 2 to 4, characterised thereby that the density measuring instrument (41) comprises a measuring cell with a plate spring.

7. Device according to one or more of claims 2 to 6, characterised thereby that the density measuring instrument (41) comprises a measuring cell which is coupled with the indicating element by way of a gear.

8. Device according to one or more of the preceding claims, characterised thereby that an antenna (17) for reception of real time data in the form of serial radio telegrams of a central clock is provided and that a time code reader with a light emitter is connected to the antenna (17) and by way of an optical conductor (13) to an optical-electrical converter, which is arranged in the equipment for measuring and/or monitoring and/or controlling and which is connected with an arrangement for guiding and/or synchronising a real time clock.

9. Device according to claim 8, characterised thereby that the central clock is the radio clock of the transmitter DCF 77.

10. Device according to claim 8 or 9, characterised thereby that the antenna (17) and the time code reader are arranged in an electromagnetically screened housing (15), which has at one side in the screening a cutout (16) for the passage of electromagnetic radiation to the antenna (17).

11. Device according to one or more of claims 2 to 10, characterised thereby that the time code reader is constructed as an integrated circuit (20) and for the reception and generation of demodulated digital output signals of the serial time code telegram with an external quartz pulse generator which is connected to the circuit (20).

12. Device according to one or more of the claims 2 to 11, characterised thereby that the operating voltage for the time code reader is produced by a solar cell generator (17).

13. Device according to one or more of claims 2 to 4, characterised thereby that the operating voltage of the time code reader is produced by a photo element (39), which can be acted on by light by way of an optical waveguide (40).

14. Device according to claim 13, characterised thereby that one end of the optical waveguide (40) is arranged in the equipment for measuring and/or controlling and/or monitoring.

15. Device according to one or more of the preceding claims, characterised thereby that at least one capacitor of the type "Goldgap" is connected to the arrangement for the production of the operating voltage for the time code reader.

## Revendications

1. Procédé pour la surveillance d'appareils de distribution remplis de gaz isolants et d'installations de distribution comprenant au moins un appareil de mesure actionné par la pression du gaz isolant dont les valeurs de mesure sont comparées à au moins une valeur de mesure prédéterminée,
caractérisé en ce que
la densité gazeuse du gaz isolant est saisie par un appareil de mesure de densité (41) qui comprend une cellule de mesure sensible à la pression avec un organe sensible à la température pour générer des valeurs de densité gazeuse indépendantes de la pression et qui est accouplé à un arbre rotatif qui présente un disque (52) muni d'un codage angulaire absolu en particulier dans le code-Gray, disque qui reçoit, par l'intermédiaire d'un guide d'ondes lumineuses (54), de la lumière pour le palpage et qui est dirigé, par la lumière réfléchie ou traversée par l'intermédiaire des guides d'ondes lumineuses (55, 56, 57), à un dispositif d'analyse (11), en ce que des valeurs de mesure sont saisies à des intervalles déterminés sur une base temporelle et sont analysées en fonction de leur courbe temporelle et en ce qu'en présence de modifications temporelles des valeurs de mesure, qui se trouvent au-delà de valeurs limites prédéterminées, un message est généré.

2. Appareil pour la surveillance d'appareils de distribution remplis de gaz isolants et d'installations de distribution comprenant au moins un appareil de mesure actionné par la pression du gaz isolant dont les valeurs de mesure sont comparées à au moins une valeur de mesure prédéterminée,
caractérisé en ce que
dans l'installation de distribution respective ou dans l'appareil de distribution respectif (2, 3, 4) est disposé au moins un appareil de mesure de densité (41, 42, 43) avec une cellule de mesure sensible à la pression qui est reliée à un organe (65) sensible à la température pour la génération de valeurs de densité gazeuse indépendantes de la pression et est accouplée à un élément d'affichage qui provoque un affichage de densité dérivé d'un angle de rotation, en ce qu'il est prévu, en tant qu'élément d'affichage de l'appareil de mesure (41), un disque (52) muni d'un codage angulaire absolu, en ce que ce disque (52) peut tourner suivant un angle dépendant de la densité, en ce que pour l'affichage, on utilise des rayons lumineux qui sont réfléchis, sont absorbés et sont passés par des segments de code (53), en ce que pour l'alimentation, la collimation, la détection et le transport de signaux, sont utilisés des guides d'ondes lumineuses (54, 55, 56, 57) qui sont guidés dans un coffret (7, 8, 9) qui est blindé contre les champs perturbateurs magnétiques et électromagnétiques et dans lequel est disposé un dispositif d'analyse et une horloge qui peut être synchronisée à des intervalles de temps avec une horloge centrale en temps réel et en ce que dans le dispositif d'analyse sont stockées des valeurs de densité pour la comparaison avec les valeurs de densité mesurées et des valeurs qui déterminent les limites des modifications temporelles.

3. Dispositif selon la revendication 2,
caractérisé en ce que
l'appareil de mesure de densité gazeuse comprend les caractéristiques suivantes :
a) une cellule de mesure, sensible à la pression, est reliée à un organe (65) sensible à la température pour la génération de valeurs de densité gazeuse, dépendantes de la pression, et est accouplée à un élément d'affichage qui provoque un affichage de la densité dérivé d'un angle de rotation,
b) l'élément d'affichage de l'appareil de mesure de densité est un disque (52) muni d'un codage angulaire absolu qui est rotatif suivant un angle dépendant de la densité gazeuse,
c) pour l'affichage sont utilisés des rayons lumineux qui sont réfléchis différemment par des segments de code ou peuvent passer,
d) des guides d'ondes lumineuses (54, 55, 56, 57) sont utilisés pour l'amenée, la collimation et la détection de la lumière et pour le transport de signaux
e) les segments de code (53), sur le disque de codage rotatif (52), sont disposés sur des pistes de manière concentrique autour du point de rotation en vue de la réalisation d'un code-Gray
f) les segments de code (53) d'une piste, qui selon le code-Gray normal ont la même distance par rapport au centre, qui ont la même longueur et qui sont disposés de manière symétrique par rapport aux autres segments de code de la piste voisine, ont une longueur différente dans un code-Gray modifié,
g) les points de départ et de fin des segments de code (53) sont sélectionnés de manière à représenter les valeurs de mesure et de limite essentielles à l'accomplissement d'une opération de mesure et en ce qu'à l'entrée du point de début et de fin du segment de code (53) dans le rayon lumineux, la suite de bit ne se modifie qu'à un endroit lors de la rotation du disque de code (52).

4. Dispositif selon la revendication 2 ou 3,
caractérisé en ce que
les guides d'ondes lumineuses (13, 30, 37, 38, 44, 45, 46) sont insérés dans des coffrets (7, 8, 9) blindés contre les champs électriques et magnétiques et/ou électromagnétiques, dans lesquels le dispositif d'analyse contient un système de processeur.

5. Dispositif selon une ou plusieurs des revendications 2 à 4,
caractérisé en ce que
l'appareil de mesure de densité (41) présente une cellule de mesure avec un tube Bourdon.

6. Dispositif selon une ou plusieurs des revendications 2 à 4,
caractérisé en ce que
l'appareil de mesure de densité (41) présente une cellule de mesure avec un ressort à lame.

7. Dispositif selon une ou plusieurs des revendications 2 à 6,
caractérisé en ce que
l'appareil de mesure de densité (41) présente une cellule de mesure qui est accouplée à l'élément d'affichage par le biais d'un engrenage.

8. Dispositif selon une ou plusieurs des revendications précédentes,
caractérisé en ce qu'une antenne (17) est prévue pour la réception de données en temps réel sous forme de télégrammes radio sériels d'une horloge centrale, et en ce que l'antenne (17) est connectée à un lecteur de code relatif au temps présentant un émetteur de lumière qui est connecté, par l'intermédiaire d'une fibre optique (13) à un convertisseur opto-électrique qui est disposé dans le dispositif de mesure et/ou de contrôle et/ou de commande et qui est relié à un dispositif pour le guidage et/ou la synchronisation d'une horloge en temps réel.

9. Dispositif selon la revendication 8,
caractérisé en ce que
l'horloge centrale est l'horloge radio de l'émetteur DCF 77.

10. Dispositif selon la revendication 8 ou 9,
caractérisé en ce que
l'antenne (17) et le lecteur de code relatif au temps sont disposés dans un coffret blindé électromagnétiquement (15) qui présente, sur un côté dans le blindage, un évidement (16) pour le passage du rayonnement électromagnétique vers l'antenne (17).

11. Dispositif selon une ou plusieurs des revendications 2 à 10,
caractérisé en ce que
le lecteur de code relatif au temps est conçu comme un circuit intégré (20) et est destiné à la réception et à la génération de signaux numériques de sortie démodulés d'un télégramme sériel de code relatif au temps avec un générateur de rythme externe à quartz qui est connecté au circuit (20).

12. Dispositif selon une ou plusieurs des revendications 2 à 11,
caractérisé en ce que
la tension de service pour le lecteur de code relatif au temps est produite par un générateur à piles solaires (17).

13. Dispositif selon une ou plusieurs des revendications 2 à 4,
caractérisé en ce que
la tension de service pour le lecteur de code relatif au temps est produite par une cellule photo-électrique (39) qui reçoit la lumière par l'intermédiaire d'une fibre optique (40).

14. Dispositif selon la revendication 13,
caractérisé en ce qu'une extrémité du fibre optique (40) est disposée dans le dispositif de mesure et/ou de commande et/ou de contrôle.

15. Dispositif selon une ou plusieurs des revendications précédentes,
caractérisé en ce qu'au moins un condensateur du type "Goldcap" est connecté au dispositif pour la génération de la tension de service du lecteur de code relatif au temps.
